(19) Europäisches Patentamt
European Patent Office
Office européen des brevets

(11) **EP 1 025 892 A1**

(12) **EUROPÄISCHE PATENTANMELDUNG**

(43) Veröffentlichungstag:
**09.08.2000 Patentblatt 2000/32**

(51) Int Cl.7: **B01D 19/00, F28B 1/02**

(21) Anmeldenummer: **99810090.3**

(22) Anmeldetag: **04.02.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB ALSTOM POWER (Schweiz) AG
5401 Baden (CH)**

(72) Erfinder: **Blangetti, Francisco
5400 Baden (CH)**

(74) Vertreter: **Pöpper, Evamaria, Dr. et al
ABB Business Services Ltd
Intellectual Property (SLE-I),
Haselstrasse 16 Bldg. 699
5401 Baden (CH)**

(54) **Oberflächenkondensator**

(57)   Die Erfindung betrifft einen Oberflächenkondensator mit einem Mantel, der im Wesentlichen aus Seitenwänden (1) und Rohrböden (2) besteht, deren Innenwände einen Dampfraum (3) begrenzen. In dem Dampfraum (3) sind Rohrbündel (4) angeordnet, welche durch eine oder mehrere Mittelgassen (5) voneinander getrennt sind. In wenigstens einer Mittelgasse (5) ist eine zusätzliche, zumindest annähernd vertikal verlaufende Wand (8) angeordnet, an deren oberem Ende eine Vorrichtung (6) zur Einführung des zu behandelnden Wassers angeordnet ist. Diese Vorrichtung (6) erzeugt an beiden Wandflächen der zusätzlichen Wand (8) einen Wasserfilm (7), der entlang der Wand (8) herabfließt und dabei im innigen Kontakt mit dem die nächsten Rohrbündel (4) umströmenden Dampf tritt und dabei entgast wird. Durch diese Anordnung der zusätzlichen Wand (8) in der Mittelgasse (5) gelingt es, die Oberfläche des Wasserfilms (7) auf einfache Weise zu vergrößern und dadurch eine sehr effiziente Entgasung zu gewährleisten.

FIG 1

## Beschreibung

### Technisches Gebiet

Die Erfindung betrifft einen Oberflächenkondensator gemäß dem Oberbegriff des Anspruchs 1, bei welchem zu behandelndes Wasser oberhalb der berohrten Zone in den Kondensator eingeleitet und dabei entgast wird.

### Stand der Technik

Solche Oberflächenkondensatoren werden insbesondere in Dampfkraftwerken zur Entgasung und Aufwärmung von Kondensat oder Zusatzwasser angewandt. Das zu behandelnde Wasser wird dabei über Rohrbündel im Kondensatorinneren gespritzt. Die Grundphilosophie für die Einspritzung über Bündel basiert auf der Nutzung des Rohrverbandes als Austauschapparat. Die Kontaktzeit des eingespritzten Wassers mit dem Dampf respektive die Verweilzeit im Dampfraum wird dabei verlängert, so dass die wärme- und stoffkinetischen Austauschvorgänge genügend Zeit zum Einwirken haben. Die Zeit bewegt sich zwischen 5 und 10 Sekunden, je nach Größe der Rohrbündel und der Dampfgeschwindigkeit.

Die strengen Anforderungen an einen niedrigen Sauerstoffgehalt im Kondensat erfordern besondere Lösungen, insbesondere wenn es sich um große Mengen von zu behandelnden Wasser handelt. Die beschriebene Art, das Wasser über Bündel zu spritzen, ist nur anwendbar, wenn die gesamte Flüssigkeitsbelastung, das heißt Kondensat und eingespritztes Wasser, bezogen auf die Austauschfläche des Kondensators, eine bestimmte Grenze nicht überschreitet. Diese Grenze liegt bei etwa 15 bis 20 g je $m^2$ und je s. Die Folge einer übermäßigen Einspritzung liegt darin, dass das Wasser zwar wirkungsvoll entgast wird, der Vorgang indes eine Vermehrung der dampfseitigen Druckverluste über Bündel verursacht und damit eine Verschlechterung des Vakuums im Kondensator bewirkt. Die Druckverluste bewirken eine Verminderung der thermischen Leistung des Kondensators. Die Entgasung wird somit mit einem kleineren k-Wert erkauft.

Aus der EP 0 561 012 B1, von der die Erfindung ausgeht, ist es bekannt, das zu behandelnde Wasser als Film an einer vertikal verlaufenden Seitenwand des Oberflächenkondensators herabgleiten zu lassen und während diesem Herabgleiten an der Seitenwand die Entgasung sicherzustellen. Auf diese Weise wird die Seitenwandfläche genutzt, um einen Wasserfilm auszubilden. Allerdings reicht in manchen Fällen die verfügbare Kondensatorwandlänge nicht aus, um den gesamten Massenstrom bei einem maximalen Berieselungmassenstrom von ca. 3,5 [kg/(s*m)] zu behandeln. Ferner sind die Wände einiger Kondensatorkonzepte nicht bzw. schwer zugänglich oder einfach so verbaut, dass sie keine Fallfilmentfaltung erlauben.

### Darstellung der Erfindung

Die Erfindung versucht, diese Nachteile zu vermeiden. Ihr liegt die Aufgabe zugrunde, einen Oberflächenkondensator zu schaffen, der ohne großen technischen Aufwand eine wirkungsvollere Entgasung ermöglicht.

Erfindungsgemäß wird dies durch einen Oberflächenkondensator mit den Merkmalen des Anspruchs 1 erreicht.

Bei diesem Oberflächenkondensator wird im Bereich einer Mittelgasse oder im Bereich mehrerer Mittelgassen eine zusätzliche, zumindest annähernd vertikal verlaufende Wand angeordnet, deren beide Wandflächen mit einem Wasserfilm durch die Vorrichtung zur Einführung des zu behandelnden Wassers beaufschlagt werden. Das aufgebrachte Wasser in Form von zwei Wasserfilmen gleitet entlang der zusätzlichen Wand nach unten und wird entlang der Filmlaufstrecke entgast. Diese Entgasung erfolgt, indem das Wasser der Wasserfilme in innigen Kontakt mit dem die wandnächsten Rohrbündel umströmenden Dampf tritt. Während diesem innigen Kontakt wird der eigentliche Stoffaustausch und Wärmeaustausch realisiert.

Durch das Einbringen der zusätzlichen Wand im Bereich der Mittelgasse zwischen zwei Rohrbündeln ist es nun möglich, zusätzliche Flächen zur Ausbildung eines Wasserfilms zur Verfügung zu stellen und deren beide Seiten mit einem Film zu versehen, wodurch die gemäß der Erfindung zur Verfügung stehende Oberfläche des Wasserfilms gegenüber dem bekannten Dampfkondensator etwa verdoppelt werden kann.

Es ist zweckmäßig, dass die Vorrichtung zur Einführung des zu behandelnden Wassers einen länglich und kastenförmig ausgebildeten Behälter aufweist, in den das zu behandelnde Wasser eingespeist wird. An seinem unteren Ende ist ein in Längsrichtung durchgehender Schlitz vorhanden, durch den die zusätzliche Wand hindurchgeführt ist.

Der Schlitz ist so dimensioniert, dass zu beiden Seiten der Wand schmale und in Längsrichtung verlaufende Durchtrittsöffnungen entstehen, durch die das Wasser kontrolliert abfließen kann, wodurch sich der Wasserfilm beidseitig an der Wand haftend und stabil ausbildet.

Ferner ist es vorteilhaft, wenn der länglich ausgebildete Behälter, zumindest im Bereich des Schlitzes im Querschnitt verjüngend, beispielsweise V-förmig ausgebildet ist. Dies führt bei konstruktiv einfachem Aufbau zu einem gleichmäßigen Durchtritt des zu behandelnden Wassers durch die durch den Schlitz und die Wand festgelegte Öffnung, was die Gleichmäßigkeit der Wasserfilme sicherstellt und dadurch eine gleichmäßige Entgasung des Wassers gewährleistet.

Schließlich wird dadurch, dass die Länge des Behälters der Länge der zusätzlichen Wand entspricht und der Schlitz in dem Behälter die Wand der Länge nach vollständig aufnimmt, erreicht, dass die zusätzliche Wand an beiden Wandflächen vollständig mit einem Wasserfilm überzogen ist und dadurch die maximale Oberfläche des Wassers auf der zusätzlichen Wand genutzt und eine besonders effiziente Entgasung erreicht ist.

Es ist besonders zweckmäßig, den länglich ausgebildeten Behälter mit einem Rohr zur Zuführung des zu behandelnden Wassers zu versehen, welches sich in Längsrichtung erstreckt und mit mehreren Öffnungen zum Austritt des zu behandelnden Wassers versehen ist. Diese Öffnungen sind gleichmäßig über die Länge des Rohres verteilt. Dadurch ist sichergestellt, dass das Wasser über die gesamte Länge und damit im gesamten Bereich des Behälters gleichmäßig verteilt eingespeist wird und Ausgleichsströmungen in Längsrichtung vermieden werden, welche die Ausbildung optimaler Rieselfilme stören könnten.

Schließlich erweist es sich als besonders vorteilhaft, in dem Behälter ein Füllstandsmesser für den Vorrat an zu behandelnden Wassers vorzusehen. Da die Menge und die Geschwindigkeit des durch den Schlitz austretenden, zu behandelnden Wassers von der Füllhöhe des Behälters abhängig ist und diese sich direkt auf den Strömungszustand des Wasserfilms und die Qualität der Entgasung auswirkt, ist es zweckmäßig, diese gezielt zu beeinflussen, das heißt anhand des Füllstandsmessers die Menge des zugeführten, zu behandelnden Wassers zu erhöhen oder bei Bedarf abzusenken. Mithin ist ein dem jeweiligen Bedarf angemessenes Zuführen von zu behandelndem Wasser gegeben und eine optimierte Prozessführung und Entgasung erreicht.

Schließlich hat es sich als vorteilhaft herausgestellt, den länglich ausgebildeten Behälter entlüftbar auszubilden. Dadurch ist gewährleistet, dass das im Behälter zu behandelnde, zu entgasende Wasser nach einer Entlüftung nicht mehr mit Luft in Kontakt treten kann, weil es sich im Kondensationsraum befindet und damit keinen zusätzlichen Sauerstoff oder ähnliche Gase aufnehmen kann, welche nachfolgend durch die erfindungsgemäße Entgasung wieder dem Wasser entzogen werden müssten.

Die aus dem Wasser desorbierte Luft wird durch Entspannungsentgasung des Wassers beim Aussetzen auf den Kondensatordruck durch einen Spalt in den Kondensationsraum geführt, woraus diese Luft durch einen in den Bündeln vorhandenen Luftkühler hindurchgeführt und schließlich aus dem Kondensator durch Vakuumpumpen entfernt wird. Die stoffkinetische Entgasung findet somit ausschließlich im Fallfilm statt.

Ferner ist es vorteilhaft, die zusätzliche Wand im Bereich oberhalb des Schlitzes mit mehreren Ausgleichsöffnungen zu versehen und diese insbesondere über die Länge des Behälters zu verteilen. Diese Ausgleichsöffnungen verhindern bzw. reduzieren Ausgleichsströmungen des zu behandelnden Wassers im Behälter nahe des Schlitzes. Damit wird erreicht, dass das zu behandelnde Wasser beim Durchtreten durch die Durchtrittsöffnungen möglichst ungestört von Ausgleichsströmungen ist. Dadurch wird die Ausbildung von Rieselfilmen deutlich verbessert.

Die Höhe des Fallfilmes $h_F$[m] (und damit der senkrechten Wand) richtet sich nach der erforderlichen Entgasung. Als allgemeine Regel gilt:

$$h_F = 0.95 * \ln(xO_{2,E}/xO_{2,A})$$

mit

$xO_{2,E}$     Massenanteil des gelösten Sauerstoffes am Eintritt

$xO_{2,A}$     Massenanteil des gelösten Sauerstoffes am Autritt

## Kurze Beschreibung der Zeichnung

In der Zeichnung ist ein Ausführungsbeispiel der Erfindung mit mehreren Rohrbündeln schematisch dargestellt. Es zeigen:

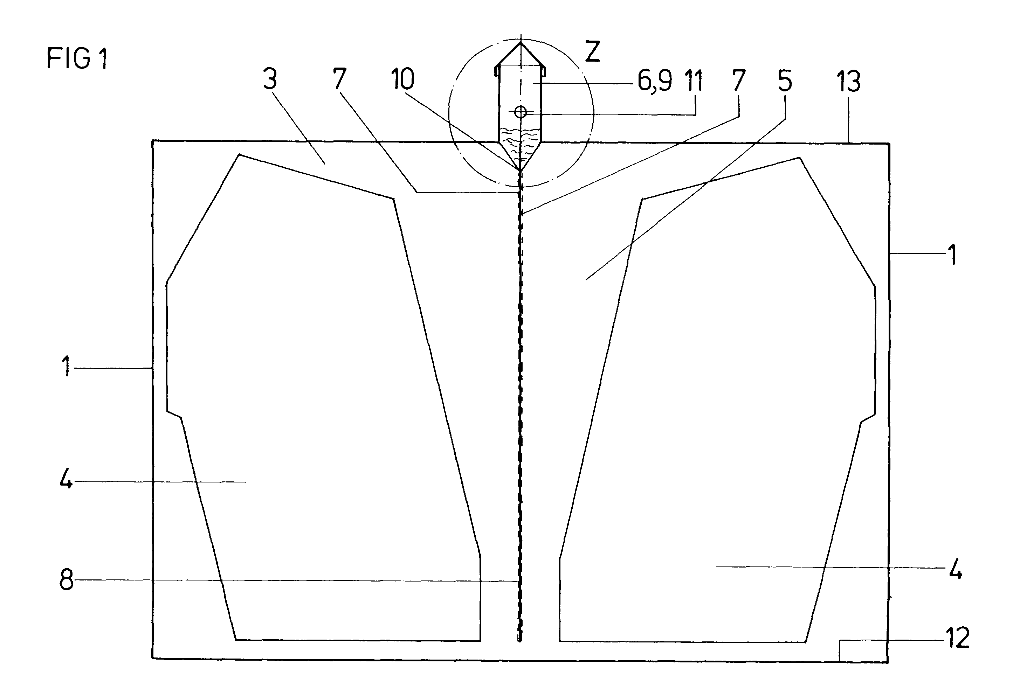

Fig. 1     einen Schnitt durch den Oberflächenkondensator und

Fig. 2     einen Ausschnitt der Fig. 1 mit der Vorrichtung zur Einführung des zu behandelnden Wassers.

Es sind nur die für das Verständnis der Erfindung wesentlichen Elemente gezeigt. Nicht dargestellt sind weitere Baugruppen der Anlage, beispielsweise die Dampf- und die Wasserzuführung, die Befestigung des Kondensatormantels am Turbinengehäuse, die Stützplatten für die Kondensatorrohre und dergleichen.

## Weg zur Ausführung der Erfindung

Oberflächenkondensatoren mit einer teilbündelartigen Anordnung der wasserdurchströmten Kühlrohre, welche maßgebend für die kastenartige, hier einen rechteckigen Grundriss aufweisende Grundform des Mantels sind, sind bekannt. Der Mantel bildet die äußere Begrenzung des Dampfraumes des Kondensators und setzt sich zusammen aus den Seitenwänden 1 und den Rohrböden 2, wobei die Seitenwände einen Kondensatorboden 12 und einen Kondensatordeckel 13 umfassen.

Die einzelnen Rohrbündel, welche aus bis zu je 4000 Kühlrohren bestehen und eine Höhe von 5 m erreichen können, sind in Rohrlängsrichtung in nicht dargestellten Stützplatten geführt. Diese Kühlrohre selbst sind an ihren beiden Enden in den Rohrböden 2 eingeschweißt und/oder eingewalzt. An die Rohrböden 2 schließen sich Wasserkammern an, die das Kühlwasser fassen und über die Rohrbündel 4 durch den Dampfraum 3 in den anderen Wasserkasten leiten.

Über einen nicht gezeigten Abdampfstutzen, mit dem der Kondensator an der Turbine hängt, strömt der Dampf in einen länglichen Kondensatorhals ein. Darin wird ein möglichst gutes homogenes Strömungsfeld erzeugt, um eine saubere Dampfbespülung der stromabwärts angeordneten Bündel 4 über deren ganze Länge vorzunehmen. Der Dampf verteilt sich im Dampfraum 3 durch Strömungskanäle. Diese verengen sich in Richtung der Strömung derart, dass die Strömungsgeschwindigkeit des Dampfes in diesen Kanälen annähernd konstant und/oder sogar beschleunigt wird. Durch die Bündel strömt der Dampf durch die geringe Reihentiefe bedingt mit kleinem Widerstand hindurch. Um die Bedingungen der in den Zuströmkanälen konstant zu haltenden oder zu erhöhenden Dampfgeschwindigkeit zu erreichen, sind die Rohrbündel 4 im Kondensator so nebeneinander angeordnet, dass zwischen ihnen Strömungskanäle entstehen, die im Schnittbild in ähnlicher Größenordnung erscheinen wie die Rohrbündel 4 selbst. Man spricht bei diesen Strömungskanälen zwischen den Rohrbündeln 4 von Mittelgassen 5.

Ein solchen Kondensator weist den Vorteil auf, dass durch die lockere Anordnung der Rohrbündel 4 alle Rohre eines Rohrbündels 4 ohne merklichen Druckverlust und mit Dampf beaufschlagt werden. Andererseits bedingt das Erfordernis nach zumindest annähernd gleicher Stärke des gesamten Rohrbündels 4 eine relativ hohe Bauhöhe des Rohrbündels 4. Hieraus resultiert die hervorragende Eignung dieses Rohrbündelkonzeptes für Großkondensatoren, bei denen eine Mehrzahl von Rohrbündeln 4 nebeneinander unter Bildung von Mittelgassen 5 angeordnet werden.

Nach Erreichen der maximal vorgegebenen Geschwindigkeit im Dampfraum 3 in der Mittelgasse 5 wird der Dampf bis auf die Geschwindigkeit Null bei gleichzeitigem Druckrückgewinn abgebremst. Dies wird dadurch erreicht, dass der untere Teil der Mittelgasse 5 divergent ausgeführt wird. Hier gilt es zu beachten, dass die Erweiterung der Mittelgasse 5 in Folge der zunehmenden Abnahme des Massestroms optisch nicht erkennbar sein muss. Maßgebend ist, dass der zum Kondensatorboden 12 hinströmende Restdampf dort einen Staudruck erzeugt. Dadurch wird der Dampf umgelenkt und versorgt so auch so die unteren Teile der Rohrbündel 4 vollständig. Die durch den Staudruck bedingte Temperaturerhöhung kommt dem von Rohr zu Rohr hinabfließenden Kondensat zugute, indem es sich, falls es unter Sättigungstemperatur abgekühlt wurde, wieder erwärmt. Dadurch sichert sich man zwei Vorteile:

- thermodynamische Verluste wegen Kondensatunterkühlung sind nicht vorhanden und

- der Sauerstoffgehalt des Kondensates ist auf ein niedriges Maß reduziert.

Im Betrieb kondensiert der Dampf an den Rohren und das Kondensat tropft gegen den Kondensatorboden 12 ab und zwar in ein am Kondensatorboden 12 angeordnetes Kondensatsammelgefäß. Von dort gelangt es in einen nicht dargestellten Wasser/Dampf-Kreislauf.

Gemäß der Erfindung wird nunmehr das im Dampfraum zu behandelnde Wasser, welches beispielsweise Zusatzwasser sein kann, oder Kondensat, welches insbesondere anlässlich der Entwässerung von Vorwärmern anfällt, in eine Vorrichtung 6 zur Einführung des zu behandelnden Wassers oberhalb der Rohrbündel 4 eingespeist. Die Vorrichtung 6 ist einer zusätzlichen Wand 8 im Bereich der Mittelgasse 5 zugeordnet und erzeugt einen Wasserfilm 7 an beiden Wandflächen der zusätzlichen Wand 8, wodurch eine sehr effiziente Entgasung des zu behandelnden Wassers durch den die Mittelgasse 5 entlangströmenden Dampf erreicht wird.

Die zusätzliche Wand 8 erstreckt sich im Wesentlichen von dem Kondensatordekkel 13 durch den Dampfraum 3 im Bereich der Mittelgasse 5 bis zu dem Kondensatorboden 12. Am oberen Ende der zusätzlichen Wand 8 ist die Vorrichtung 6 in einer Ausnehmung des Kondensatordeckels 13 angeordnet und schließt mit diesem gasdicht ab. Die Vorrichtung 6 weist an ihrem unteren Ende einen Schlitz 10 auf, durch den die zusätzliche Wand 8 hindurchgeführt ist. Dabei ist der Schlitz 10 in seinen Abmessungen so gewählt, dass zu beiden Seiten der Wand 8 schmale und in Längsrichtung verlaufende Durchtrittsöffnungen 10a, 10b entstehen, durch die das Wasser kontrolliert abfließen kann und zu beiden Seiten der Wand 8 ein Wasserfilm 7 entsteht. Nach einer kurzen Filmlaufstrecke ist ein turbulenter Strömungszustand erreicht, wobei der Wasserfilm 7 an der Wand 8 haftet.

Während des Abfließens über die Wand 8 ist dieser Film 7 in einem innigen Kontakt mit dem Dampf, der sich im Bereich der Mittelgasse 5 befindet und wird dadurch entgast. Dabei sind die Vorrichtung 6 und die Wand 8 so ausgebildet, dass sich ein bevorzugter Rieselstrom zwischen 1,5 und 3,5 kg/(ms) idealerweise 2,5 kg/(ms) entsteht.

Die Vorrichtung 6 ist mit einem Behälter 9 versehen ist, in dem über ein Rohr 11 das zu behandelnde Wasser eingespeist wird. Durch die Menge des zwischengespeicherten Wassers wird ein hydrostatischer Druck von definierter Größe eingestellt. Abhängig von dem hydrostatischen Druck kann der Rieselstrom erhöht oder verringert werden. Als Maß für den hydrostatischen Druck dient die Füllhöhe im Behälter 9, welche durch einen hier nicht dargestellten Füllstandsmesser bestimmt wird.

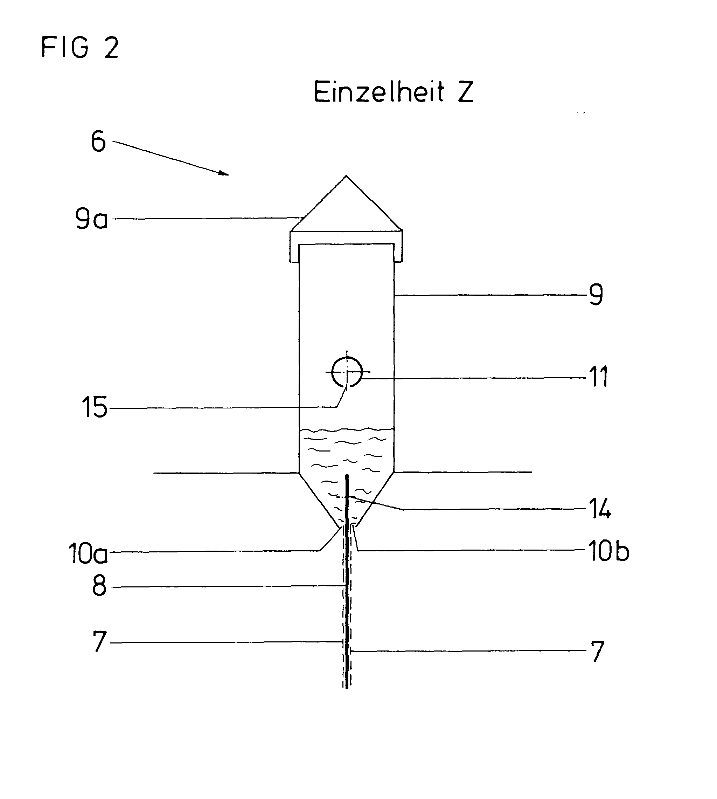

Die Füllhöhe des zu behandelnden Wassers ist in Fig. 2 als Wellenlinie bzw. als gestrichelte Wellenlinie angedeutet.

Der Schlitz 10 bildet durch die hindurchtretende zusätzliche Wand 8 zwei Durchtrittsöffnungen 10a, 10b, durch welche das zu behandelnde Wasser aus dem Behälter 9 hindurchtritt und die beiden Wasserfilme 7 bildet. Im Bereich oberhalb des Schlitzes 10 respektive der Durchtrittsöffnungen 10a, 10b sind Augleichsöffnungen 14 in der Wand 8 des Behälters 9 angeordnet. Weiterhin sind längs des Rohres 11 Öffnungen 15 vorhanden, so dass das zugeführte Wasser optimal vergleichmäßigt abströmen kann.

Der Behälter 9 ist mit einem abnehmbaren Behälterdeckel 9a versehen, durch den auf einfache Weise eine Wartung, Instandhaltung und Reinigung des Behälters 9 gegeben ist.

Zwischen dem Behälterdeckel 9a und dem Behälter 9 entsteht ein offener Randspalt. Er dient zum Druckausgleich mit dem Kondensatordruck und erlaubt gleichzeitig das Entweichen der desorbierten Luft, die durch die Entspannungsentgasung bei gesättigter Luft entstehen kann.

Der Behälter 9 der Vorrichtung 6 ist in seinem unteren Bereich in Richtung des Schlitzes 10 V-förmig verjüngend ausgebildet.

Die erfindungsgemäße Ausbildung der zusätzlichen Wand 8 im Bereich der Mittelgasse 5 zeigt im Gegensatz zu einer Realisierung von Wasserfilmen zur Entgasung auf den Seitenwänden eine gesteigerte Effizienz der Entgasung, da nun der Dampf nicht erst durch die Rohrbündel 4 bis zu den Seitenwänden 1 dringen muss und erst dort zur endgültigen Entgasung herangezogen werden kann.

Außerdem ermöglicht das erfindungsgemäße Konzept die kostengünstige Nachrüstung vorhandener Oberflächenkondensatoren, deren Entgasungseffizienz erheblich gesteigert werden kann.

## Bezugszeichenliste

| | |
|---|---|
| 1 | Seitenwand |
| 2 | Rohrboden |
| 3 | Dampfraum |
| 4 | Rohrbündel |
| 5 | Mittelgasse |
| 6 | Vorrichtung zur Einführung des zu behandelnden Wassers |
| 7 | Wasserfilm |
| 8 | zusätzliche Wand |
| 9 | Behälter |
| 9a | Behälterdeckel |
| 10 | Schlitz |
| 10a | Durchtrittsöffnung |
| 10b | Durchtrittsöffnung |
| 11 | Rohr |
| 12 | Kondensatorboden |
| 13 | Kondensatordeckel |
| 14 | Ausgleichsöffnung |
| 15 | Öffnung |

## Patentansprüche

1. Oberflächenkondensator mit einem Mantel, der im Wesentlichen aus Seitenwänden (1) und Rohrböden (2) besteht, deren Innenwände einen Dampfraum (3) begrenzen, mit Rohrbündeln (4), die sich im Dampfraum (3) zwischen den Rohrböden (2) erstrecken und die durch eine oder mehrere Mittelgassen (5) voneinander getrennt sind, mit einer Vorrichtung (6) zur Einführung des zu behandelnden Wassers oberhalb der Rohrbündel (4), welche einen Wasserfilm (7) erzeugt, der entlang einer Wand (8) herabfließt und dabei in innigem Kontakt mit dem die nächsten Rohrbündel (4) umströmenden Dampf tritt und dabei entgast wird,
dadurch gekennzeichnet, dass im Bereich wenigstens einer Mittelgasse (5) eine zusätzliche, zumindest annähernd vertikal verlaufende Wand (8) angeordnet ist, der die Vorrichtung (6) zur Einführung des zu behandelnden Wassers dahingehend zugeordnet ist, dass beide Wandflächen der zusätzlichen Wand (8) mit einem Wasserfilm (7) beaufschlagt werden und eine Entgasung des Wassers an beiden Wandflächen erfolgen kann.

2. Oberflächenkondensator nach Anspruch 1,
dadurch gekennzeichnet, dass die Vorrichtung (6) zur Einführung des zu behandelnden Wassers einen länglich ausgebildeten Behälter (9) aufweist, der das zu behandelnde Wasser aufnimmt, der an seinem unteren Ende einen Schlitz (10) zeigt, durch den die zusätzliche Wand (8) unter Bildung seitlicher Durchtrittsöffnungen hindurchgeführt ist.

3. Oberflächenkondensator nach Anspruch 2,
dadurch gekennzeichnet, dass der Behälter (9) zumindest im Bereich des Schlitzes (10) im Querschnitt verjüngend, vorzugsweise V-förmig ausgebildet ist.

4. Oberflächenkondensator nach Anspruch 2 oder 3,
dadurch gekennzeichnet, dass die Länge des Behälters (9) der Länge der zusätzlichen Wand (8) entspricht und die Wand (8) den Schlitz (10) der Länge nach vollständig durchsetzt.

5. Oberflächenkondensator nach einem der Ansprüche 2 bis 4,
dadurch gekennzeichnet, dass der Behälter (9) entlüftbar ausgebildet ist.

6. Oberflächenkondensator nach einem der Ansprüche 2 bis 5,
dadurch gekennzeichnet, dass der länglich ausgebildete Behälter (9) ein Rohr (11) zur Zuführung des zu behandelnden Wassers aufweist, welches sich längs in dem Behälter (9) erstreckt und welches über seine Länge mit mehreren Öffnungen (15) versehen ist.

7. Oberflächenkondensator nach einem der Ansprüche 2 bis 6,
dadurch gekennzeichnet, dass der länglich ausgebildete Behälter (9) einen Füllstandsmesser aufweist.

8. Oberflächenkondensator nach einem der Ansprüche 2 bis 7,
dadurch gekennzeichnet, dass die Wand (8) im Bereich oberhalb des Schlitzes (10) mehrere Ausgleichsöffnungen (14) aufweist.

FIG 1

FIG 2

Einzelheit Z

# EP 1 025 892 A1

**Europäisches Patentamt**

## EUROPÄISCHER RECHERCHENBERICHT

**Nummer der Anmeldung**

EP 99 81 0090

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP 0 561 012 A (ASEA BROWN BOVERI) 22. September 1993 * Ansprüche; Abbildungen * | 1,2 | B01D19/00 F28B1/02 |
| A | US 5 595 063 A (TRAGE BURKHARD ET AL) 21. Januar 1997 * Spalte 4, Zeile 24 – Zeile 51; Abbildungen * | 1 | |
| A | US 4 592 419 A (ISHIDA KEIZO ET AL) 3. Juni 1986 * Spalte 3, Zeile 33 – Zeile 37; Anspruch 2; Abbildungen * | 1 | |
| A | DE 186 172 C (GUSTAV SCHETELIG) 29. Juni 1907 * das ganze Dokument * | 1-4 | |
| A | DE 599 504 C (FRANZ VAN BREMEN) 4. Juli 1934 * Spalte 2, Zeile 71 – Zeile 88; Abbildungen * | 1 | |

**RECHERCHIERTE SACHGEBIETE (Int.Cl.6)**

B01D
F28B

Der vorliegende Recherchenbericht wurde für alle Patentansprüche erstellt

| Recherchenort | Abschlußdatum der Recherche | Prüfer |
|---|---|---|
| DEN HAAG | 1. Juli 1999 | Mootz, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

**ANHANG ZUM EUROPÄISCHEN RECHERCHENBERICHT**
**ÜBER DIE EUROPÄISCHE PATENTANMELDUNG NR.**

EP 99 81 0090

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-1999

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0561012 | A | 22-09-1993 | AU | 3516993 | A | 23-09-1993 |
| | | | DE | 59206426 | D | 04-07-1996 |
| | | | DK | 561012 | T | 14-10-1996 |
| | | | ES | 2089268 | T | 01-10-1996 |
| US 5595063 | A | 21-01-1997 | DE | 4407843 | C | 28-09-1995 |
| | | | EP | 0671585 | A | 13-09-1995 |
| US 4592419 | A | 03-06-1986 | JP | 1466368 | C | 10-11-1988 |
| | | | JP | 59145484 | A | 20-08-1984 |
| | | | JP | 63012238 | B | 17-03-1988 |
| | | | EP | 0115865 | A | 15-08-1984 |
| DE 186172 | C | | KEINE | | | |
| DE 599504 | C | | KEINE | | | |

EPO FORM P0461

Für nähere Einzelheiten zu diesem Anhang : siehe Amtsblatt des Europäischen Patentamts, Nr.12/82